# FASCICULE DE BREVET EUROPEEN

(11) **EP 3 365 162 B1**
(45) Date de publication et mention de la délivrance du brevet: **06.09.2023**
(21) Numéro de dépôt: 16785166.6
(22) Date de dépôt: 24.10.2016
(51) Int. Cl.: B29C 51/14, B29C 70/54, B29B 11/16, B32B 7/08, B29C 70/16, B32B 5/10, B32B 27/06

(54) **PROCÉDÉ POUR LA RÉALISATION À PLAT D'UNE PRÉFORME COMPOSITE COMPLEXE**
VERFAHREN ZUR FLACHEN HERSTELLUNG EINER KOMPLEXEN VERBUNDSTOFFVORFORM
METHOD FOR FLAT PRODUCTION OF A COMPLEX COMPOSITE PREFORM

(30) Priorité: 22.10.2015 FR 1502239
(43) Date de publication de la demande: 29.08.2018
(73) Titulaire: Institut de Recherche Technologique Jules Verne, 44440 Bouguenais (FR)
(72) Inventeur: KNEVELER, Matthieu, 44840 Les Sorinières (FR); MARCHAND, Christophe, 44400 Rezé (FR)
(74) Mandataire: Alatis
(86) Numéro de dépôt international: PCT/EP2016/075485
(87) Numéro de publication internationale: WO 2017/068174

(56) Documents cités:
- WO-A1-2012/104088
- WO-A1-2014/166493
- DE-A1- 19 922 799
- US-A- 5 308 228
- MATTHEIJ P ET AL: "Tailored fiber placement-Mechanical properties and applications", JOURNAL OF REINFORCED PLASTICS AND COMPOSITES, TECHNOMIC PUBLISHING, US, vol. 17, no. 9, 1 janvier 1998 (1998-01-01), pages 774-786, XP009133250, ISSN: 0731-6844

## Description

L'invention concerne un procédé pour la réalisation à plat d'une préforme stratifiée composite de forme complexe. L'invention est plus particulièrement, mais non exclusivement destinée aux domaines de la fabrication de pièces automobiles ou aéronautiques, à partir de préformes dites sèches. La préforme objet de l'invention est utilisée pour la réalisation d'une pièce composite dont la forme s'étend dans plus d'un plan. Plus particulièrement, la préforme objet de l'invention comprend un noyau apte à épouser localement la forme de la pièce. Un tel noyau est utilisé pour écarter localement, et sur une distance plus ou moins importante, des plis de la stratification, lesquels plis se rejoignent à nouveau à l'extérieur dudit noyau.

Une préforme sèche est une préforme fibreuse comprenant moins de 5 % de résine, laquelle préforme est utilisée comme phase de renfort d'un matériau composite, la pièce correspondant à ladite préforme étant obtenue par l'injection ou l'infusion d'un polymère à l'état liquide ou pâteux dans ladite préforme sèche. Selon des exemples de réalisation, ledit polymère, qui constitue la matrice du matériau composite ainsi obtenu, est un polymère thermodurcissable, un polymère thermoplastique, un mélange de polymères ou une stratification de tels polymères. Selon des exemples de mise en oeuvre, l'imprégnation de la préforme par ledit polymère est réalisée sous pression ou sous basse pression, le front d'imprégnation progressant parallèlement ou perpendiculairement à l'empilement de plis constituant la préforme. Ces techniques sont connues de l'art antérieur et ne sont pas exposées plus avant. La réalisation d'une préforme fibreuse, particulièrement lorsque celle-ci comprend des parties s'étendant dans plusieurs plans non parallèles est une opération essentiellement manuelle, tant pour la réalisation de la préforme elle-même que pour sa manipulation et son installation dans l'outillage dans lequel elle sera imprégnée du polymère constituant la matrice du matériau composite. Le plus souvent, selon l'art antérieur, une telle préforme est réalisée en assemblant une pluralité de préformes dans l'outillage, ou en réalisant plusieurs parties, imprégnées séparément, puis assemblées.

Le document US 2014/0300138 est un exemple de procédé de l'art antérieur pour la réalisation d'une partie de plancher automobile en assemblant plusieurs préformes sèches dans un moule, avant leur imprégnation par infusion de résine.

Ce procédé de l'art antérieur est difficile à automatiser et ne permet pas d'atteindre économiquement une cadence de production élevée, de sorte qu'il reste limité à des applications visant des véhicules automobiles haut de gamme.

L'introduction dans une préforme, lors du drapage des plis, d'un noyau dont la forme présente un cintrage dont le rayon est orienté parallèlement à la direction d'empilement des plis est très délicate.

Le document US 8 623 159 décrit un procédé pour l'intégration de raidisseurs tubulaires dans un plancher, notamment d'hélicoptère, lesdits renforts tubulaires étant intégrés entre deux peaux. Une méthode d'obtention connue de tels raidisseurs tubulaires est le tressage de fibres autour d'un noyau. Ce document vise à définir une alternative à cette opération de tressage. Il ne divulgue pas l'insertion d'un noyau en forme réalisant localement l'écartement des plis de la stratification, lesquels plis se rejoignant à l'extérieur dudit noyau.

Le document WO 2014/166493 décrit un procédé de réalisation d'un pied de pale d'éolienne. Selon cet exemple de l'art antérieur, les plis sont drapé dans un moule à la forme de la pièce. Afin de faciliter le drapage des stratification de plis sont assemblées entre-elles en introduisant une bande de rigidification à l'intérieur de la stratification. Cette bande de rigidification permet de soutenir la stratification déposée dans le moule en forme afin d'éviter son froissement lors de la dépose.

Le document US 5 308 228 décrit un procédé pour la réalisation d'une aube de turbomachine en matériau composite. Ladite aube est constituée d'un noyau central recouvert par une pluralité de nappes fibreuses. Le noyau est initialement introduit dans un manchon tissé ou tricoté.

L'invention vise à résoudre les inconvénients de l'art antérieur et concerne à cette fin un procédé selon la revendication 1 pour la réalisation d'une pièce composite à renfort fibreux continu à partir d'une préforme sèche, lequel procédé comprend :
a. une opération de drapage à plat d'une première stratification de plis secs déformables ;
b. le positionnement sur ladite première stratification d'un noyau constitué d'un matériau thermoformable s'étendant sur une partie de la surface de la première stratification ;
c. une opération de drapage d'une deuxième stratification de plis secs déformables s'étendant au-dessus du noyau et jusqu'à la première stratification ;
d. une opération de couture suivant un contour défini, ladite couture liant et s'étendant entre la deuxième et la première stratification ;
e. placer la préforme obtenue à l'issue de l'étape d) dans l'empreinte tridimensionnelle d'un moule ;
f. imprégner la préforme sèche d'un polymère ;
g. consolider ledit polymère ;
h. démouler la pièce obtenue à partir de la préforme ;

lequel procédé comprend ente l'étape d) et l'étape e) une étape consistant à :
   j. thermoformer la préforme comprenant le noyau à la forme de la pièce;
dans lequel l'étape d) comprend une opération consistant à:
   di. réaliser une couture (420) s'étendant entre la première et la deuxième stratification selon un contour de pliage;
et dans lequel l'étape e) comprend une opération consistant à:
   ei. plier la préforme dans l'empreinte selon le contour de couture réalisé à l'étape di).

Ainsi, le procédé objet de l'invention permet la réalisation d'une pièce tridimensionnelle en utilisant une préforme unique, réalisée par drapage à plat, avec une seule opération d'imprégnation / consolidation. L'opération de drapage à plat est facilement automatisable. La préforme ainsi réalisée, stabilisée par l'opération de couture est facilement manipulée sans risque de décohésion ou de désalignement des renforts. La couture permet de lier les plis sans entraver outre mesure leur capacité de déformation. Le noyau est essentiellement « plat » lors du drapage, c'est-à-dire que l'ensemble de ses sections sont contenues entre deux plans d'orientations constantes sur toute sa longueur, ce qui facilite grandement le drapage.

Dans tout le texte, les termes « plis secs » désignent des plis de fibres imprégnés d'une faible quantité d'un polymère thermodurcissable ou thermoplastique, quantité inférieure à 5 % en masse.

Dans tout le texte les termes « plis déformables » désignent des fibres continues arrangées selon des directions définies et assemblées sous la forme de tissus ou de non-tissés, ces derniers étant couramment désignés sous les termes de « *non crimp fabrics* », ou NCF. Ce type de pli possède une aptitude à épouser une forme non développable par la modification relative de la distance entre les fibres constituant le pli sans perdre sa cohésion.

Dans tout le texte le terme « empreinte », sauf indication particulière, désigne tant une forme en creux qu'une forme en relief.

L'invention est avantageusement mise en oeuvre selon les modes de réalisation et les variantes exposés ci-après, lesquels sont à considérer individuellement ou selon toute combinaison techniquement opérante.

Selon l'invention, l'étape d) comprend une opération consistant à :
di. réaliser une couture s'étendant entre la première et la deuxième stratification selon un contour de pliage ;
et l'étape e) comprend une opération consistant à :
ei. plier la préforme sur l'empreinte selon le contour de couture réalisé à l'étape di).

Ainsi, le contour de pliage est parfaitement délimité par la couture et facilement positionné dans l'empreinte du moule.

Avantageusement, la couture réalisée à l'étape d) est une couture en zigzag. Ainsi, ladite couture assure la cohésion des différents lés et stratifications de la préforme sans dégrader l'aptitude à la déformation de ladite préforme, aptitude qui lui est conférée par la nature des plis déposés.

Selon des modes de réalisations alternatifs, ne faisant pas partie de l'invention:
- l'étape j) est réalisée entre les étapes e) et f) ;
- l'étape j) est réalisée entre les étapes f) et g) ;

Ainsi le procédé offre une grande souplesse en matière de gamme de réalisation, notamment en fonction de la nature du ou des polymères d'imprégnation.

Avantageusement, le procédé objet de l'invention comprend une étape consistant à :
I. coller une bande de renfort unidirectionnelle à l'emplacement de la couture réalisée à l'étape d).

Avantageusement, les fibres de ladite bande unidirectionnelle sont orientées parallèlement à la direction générale de progression de la couture.

Ainsi, ces bandes de renforts constituées de fibres unidirectionnelles renforcent la zone de couture vis-à-vis des sollicitations mécaniques sans dégrader la capacité de la préforme à épouser les formes de l'empreinte. Elles permettent également de pré-assembler les noyaux lorsque la préforme comporte plusieurs noyaux.

Selon un mode de mise en oeuvre avantageux, le procédé objet de l'invention comprend entre les étapes d) et e) une étape de stockage intermédiaire de la préforme et une étape de transport de la préforme. L'utilisation d'une préforme sèche permet ce mode de mise en oeuvre en évitant les difficultés liées à la réticulation du polymère imprégnant les plis pré-imprégnés d'une résine thermodurcissable, et la stabilisation des stratifications par couture permet de manipuler facilement la préforme et de la stocker à plat. Ainsi, le procédé objet de l'invention, permet, d'un point de vue industriel de réaliser la préforme et son imprégnation de polymère dans des sites distants.

Selon un mode de réalisation particulier, les étapes g) et f) sont réalisées avec la préforme maintenue sur l'empreinte par un ensachage tiré au vide. Ce mode de réalisation est économique en matière d'outillage, et plus particulièrement adapté à une pièce comprenant une matrice polymère thermodurcissable.

Selon un mode de réalisation alternatif, les étapes g) et f) sont réalisées avec la préforme maintenue dans une cavité comprise entre un moule mâle et un moule femelle. Ce mode de réalisation est plus adapté à une automatisation complète du procédé objet de l'invention et par ailleurs, plus particulièrement, mais non exclusivement adapté à une pièce comprenant une matrice polymère thermoplastique.

Avantageusement, le noyau comporte des perforations pour faciliter l'imprégnation de la préforme au cours de l'étape f). Ainsi, le noyau n'entrave pas l'imprégnation des plis fibreux.

Le procédé objet de l'invention est avantageusement utilisé pour la fabrication d'une pièce constituant une partie de plancher d'un véhicule automobile. Ainsi, le procédé objet de l'invention permet de rassembler la plupart des fonctions structurelles et fonctionnelles de la pièce en une seule préforme faisant l'objet d'un seul processus d'imprégnation.

L'invention est exposée ci-après selon ses modes de réalisation préférés, nullement limitatifs, et en référence aux figures 1à 6, dans lesquelles :
- la figure 1 représente selon une vue en perspective, un exemple de pièce constituant une partie d'un plancher automobile et réalisée selon le procédé objet de l'invention ;
- la figure 2 montre, selon une vue en perspective, un exemple de noyaux utilisés pour la constitution de la préforme selon le procédé objet de l'invention ;
- la figure 3 représente selon une vue en perspective et en éclaté, un exemple de réalisation de la stratification de la préforme objet de l'invention ;
- la figure 4 montre selon une vue de dessus un exemple de réalisation des coutures de la préforme ;
- la figure 5 illustre selon une vue de dessus l'opération de renfort des coutures par des bandes de fibres unidirectionnelle selon le procédé objet de l'invention ;
- et la figure 6 montre, selon une vue en coupe AA définie sur la pièce sur cette même figure, un exemple de réalisation d'un outillage pour l'imprégnation en forme de la préforme selon le procédé objet de l'invention.

Le document FR 2 950 285 décrit un exemple de réalisation d'un dispositif pour le drapage automatisé d'une préforme sèche sur un outillage sensiblement plan. Le drapage des stratifications de la préforme selon le procédé objet de l'invention est réalisé, à titre d'exemple non limitatif, au moyen d'un dispositif semblable à celui décrit dans cet art antérieur. Ainsi, selon cet exemple de réalisation, un lé constitué d'un tissu ou d'un non-tissé multidirectionnel est prédécoupé à un contour défini, pris par un rouleau par aspiration et déposé sur la préforme à une localisation prédéterminée. La cohésion du lé avec le reste de la préforme déjà déposé est obtenue, selon cet art antérieur, en activant une faible quantité de polymère comprise dans ledit lé. Ledit polymère est activé par chauffage et le collage est obtenu par un pressage au moyen d'un second rouleau, dit maroufleur, compliant. La combinaison de ces moyens permet de déposer les lés selon une orientation précise en regard des fibres qu'ils contiennent et en les conservant sous une tension suffisante lors de la dépose de sorte à assurer l'absence d'ondulation. La mise en oeuvre du procédé objet de l'invention est réalisée au moyen d'un dispositif similaire mais comprenant en outre des moyens de couture. Lesdits moyens de couture sont, par exemple, placés entre le rouleau de dépose et le rouleau maroufleur ou après le rouleau maroufleur. Lesdits moyens de couture sont utilisés en complément ou en substitution des moyens de cohésion par activation du polymère. L'utilisation de la couture, plus particulièrement en réalisant une couture suivant une trajectoire en zigzag dans le plan de dépose permet d'assurer la cohésion de la préforme tout en lui conservant une certaine capacité à épouser une forme tridimensionnelle, par l'aptitude des lés déposés, tissus ou NCF, à une telle déformation relative. Les modes de cohésion des lés : par soudure via un polymère et/ou par couture, sont sélectionnés en fonction de la forme à épouser.

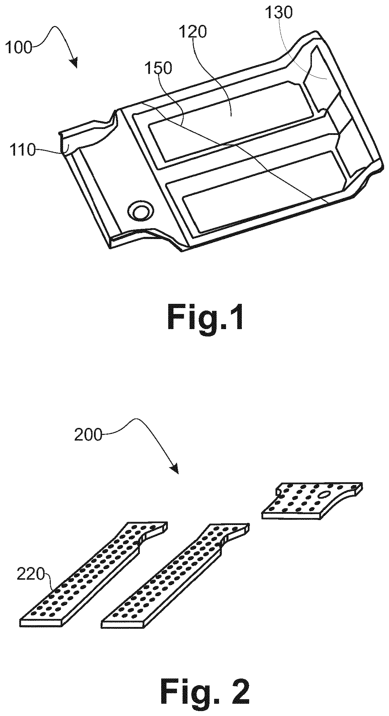

Figure 1, selon un exemple de mise en oeuvre du procédé objet de l'invention, celui-ci est utilisé pour fabriquer une pièce (100) constituant une partie d'un plancher automobile, destinée à reposer sur des longerons (non représentés). Ladite pièce (100) comprend, selon cet exemple de réalisation, des flancs (110) avec des bords en retournement, des emboutis (120) locaux se terminant sur un pliage (130) également avec des bords en retournement. Ladite pièce est constituée d'un matériau composite à matrice polymère renforcée par des fibres (150) continues, c'est-à-dire des fibres qui majoritairement s'étendent d'un bord à l'autre de la pièce selon une orientation définie. Lesdites fibres comprennent, par exemple, des fibres de verre, de carbone, d'aramide, ou des fibres naturelles telles que des fibres de lin, de coton, de bambou, sans que ces exemples ne soient limitatifs.

Selon l'art antérieur, une telle pièce est obtenue en assemblant plusieurs pièces composites, notamment par co-cuisson, ou plusieurs préformes dans un outillage avant de réaliser leur imprégnation.

Figure 2, selon une première étape d'un exemple de mise en oeuvre du procédé objet de l'invention, des noyaux (200) constitués de mousse thermoformable sont découpés aux contours adaptés. Selon cet exemple de réalisation, les noyaux (200) sont percés d'une pluralité d'orifices (220) d'un diamètre compris entre 1 mm et 5 mm, afin de faciliter le processus d'injection ou d'infusion de polymère à travers lesdits noyaux. Selon d'autres exemples de mise en oeuvre, un noyau comprend en outre une grille ou une plaque métallique ou encore un complexe d'isolation phonique ou thermique, compatibles avec sa faculté de thermoformage.

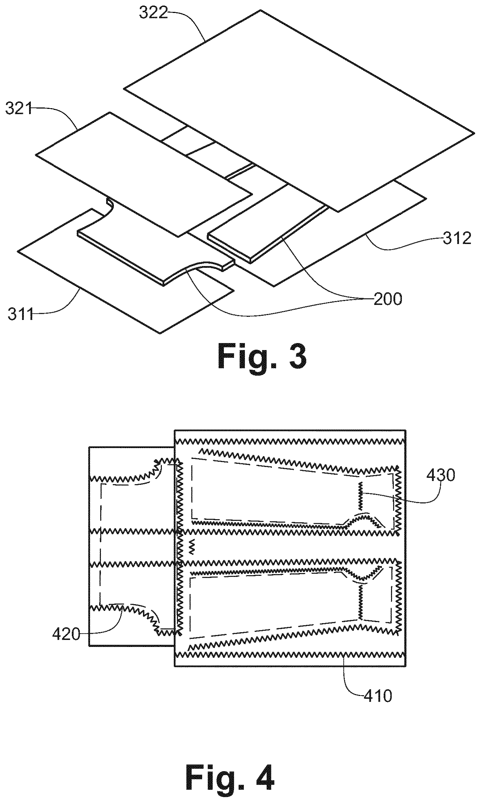

Figure 3, des lés (311, 312) de plis secs, constitués par exemple de NCF ou d'un tissu sont drapés au moyen d'une machine à draper automatique de sorte à constituer une première stratification. Selon un exemple de réalisation les NCF constituant tout ou partie de ces lés comprennent une pluralité de plis de fibres continues dont l'orientation et la nature sont différentes. Par exemple, un NCF comprend un premier pli de fibres de carbone orientées à +45° un deuxième pli de fibres d'aramide orientées à 0°, un troisième pli de fibres de carbone orientées à -45° sans que cet exemple ne soit ni limitatif ni exhaustif. Ainsi, la nature des fibres drapées est adaptée pour répondre aux besoins de tenue mécanique vis-à-vis des sollicitations de service de la pièce réalisée et aux besoins en situation de sollicitation exceptionnelle, comme en présence d'un choc ou d'une pénétration d'un corps étranger. La première stratification est, par exemple, maintenue sur la table de la machine à draper par dépression.

Avantageusement, les lés sont prédécoupés avant d'être déposés. Ainsi, les contours de la préforme et des zones renforcées sont réalisés dès le drapage.

Les noyaux (200) sont ensuite posés aux emplacements prévus sur ladite première stratification. Le positionnement des noyaux est par exemple réalisé au moyen d'un robot. Les noyaux sont, par exemple, collés sur ladite première stratification. Selon un mode de réalisation particulier (non représenté) des bandes de fibres unidirectionnelles s'étendant entre les noyaux sont collées sur ceux-ci de sorte à les maintenir en position.

Les lés (321, 322) constituant une deuxième stratification sont déposés au-dessus des noyaux (200) et de la première stratification. La souplesse relative desdits noyaux ne gêne pas la dépose de ces lés (321, 322) également prédécoupés avant leur drapage. Selon une variante de réalisation lesdits lés constituant la deuxième stratification sont stabilisés sur la préforme par l'activation thermique d'un polymère, par exemple un polymère thermoplastique, poudré sur lesdits lés, ou encore par collage.

Figure 4, les stratifications sont assemblées par des coutures (410, 420, 430) préférablement réalisées en zigzag. Selon des exemples de mises en oeuvre, lesdites coutures (420) suivent le contour des noyaux, de sorte à permettre la séparation des stratifications de part et d'autre desdits noyaux, en renforçant cette zone de séparation vis-à-vis du pelage. D'autres coutures (410) constituent des lignes de pliage de la préforme. Selon un exemple de réalisation, la préforme ainsi constituée comprend des lignes de couture (430) joignant les stratifications et traversant les noyaux. L'emplacement des coutures est déterminé par l'expérience ou la simulation.

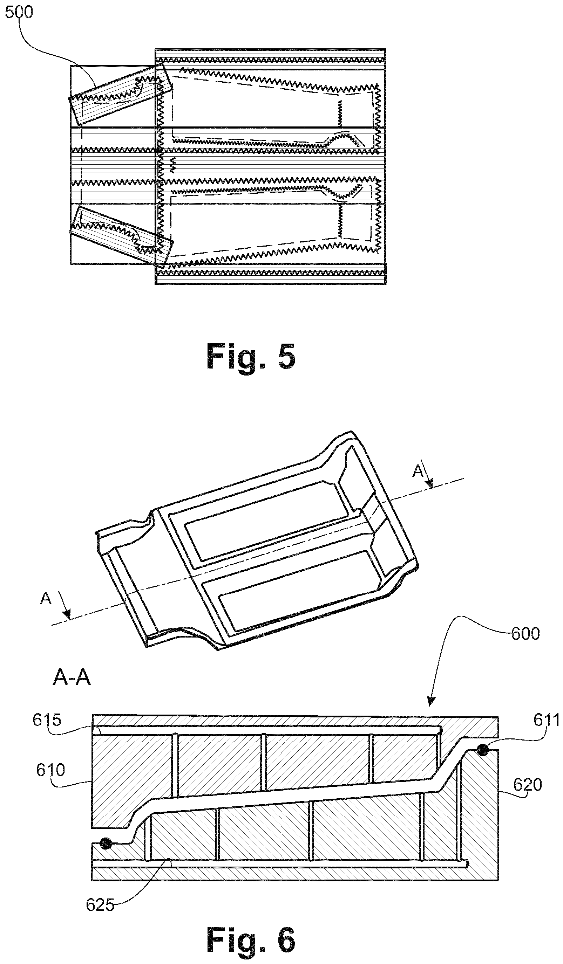

Figure 5, les coutures les plus sollicitées sont couvertes par des bandes (500) de fibres unidirectionnelles, par exemple de fibres de carbone, afin de les renforcer. Les fibres desdites bandes sont orientées sensiblement parallèlement à la direction générale de progression des coutures qu'elles recouvrent. La préforme ainsi constituée est plate et sèche.

Selon un mode de mise en oeuvre, la préforme est découpée sur toute son épaisseur, selon un contour et un emplacement définis de sorte à permettre sa mise en forme ultérieure dans l'outillage.

Figure 6, selon un premier exemple de mise en oeuvre, la préforme est placée dans l'empreinte d'un moule (600). Selon cet exemple de réalisation, ledit moule comprend deux parties (610, 620) et des moyens (611) d'étanchéité de sorte que lorsque le moule est fermé lesdites deux parties (610, 620) définissent une cavité étanche dans laquelle se trouve la préforme sèche. Le moule comporte des moyens de tirage au vide de ladite cavité, et selon un exemple de réalisation, des moyens de chauffage de chaque partie (610, 620) du moule. Selon des exemples de réalisation, le chauffage des deux parties du moule est réalisé par la circulation d'un fluide, par des résistances électriques ou par induction. Selon un exemple de mise en oeuvre, le même moule est utilisé pour l'imprégnation de la préforme et son thermoformage, ainsi, le moule étant préchauffé à une température adaptée, la fermeture du moule conforme la préforme à la forme de l'empreinte. La préforme étant tirée au vide dans la cavité du moule, des canaux (625, 615) permettent d'injecter un polymère dans la préforme, de sorte à l'imprégner. Cette injection est réalisée à une température adaptée au polymère utilisé. Selon un exemple de réalisation, des polymères de natures différentes sont injectés dans la partie supérieure (610) et dans la partie inférieure (620) du moule, ceci afin de conférer des propriétés adaptées à la pièce en fonction des modes de sollicitation qu'elle subit. Selon des exemples de mise en oeuvre, l'injection est réalisée à basse pression, par le vide créé dans la cavité, ou sous pression.

Selon une autre variante de réalisation (ne faisant pas partie de l'invention), la préforme est imprégnée à plat dans un moule adapté. Puis la préforme est thermoformée dans un moule de thermoformage. Selon cette variante de réalisation, le polymère d'imprégnation est un polymère thermoplastique, ou, s'il s'agit d'une résine thermodurcissable, ladite résine est incomplètement cuite lors de l'opération d'imprégnation de sorte à lui conserver une capacité de déformation à chaud et ainsi permettre l'opération de thermoformage. La cuisson de la résine est alors achevée dans le moule de thermoformage, après le formage de la préforme.

Selon encore une autre variante de réalisation, la préforme sèche est thermoformée dans un moule séparé du moule d'injection avant l'opération d'imprégnation. Le noyau ainsi thermoformé participe au maintien en forme de la préforme, celle-ci étant alors manipulée sans risque de décohésion ou de déformation, notamment pour réaliser l'opération d'imprégnation sur un site industriel ou dans un atelier distinct.

Dans tous les cas, la gamme se termine par la consolidation de la préforme en forme, soit par la solidification du polymère lorsqu'il s'agit d'un polymère thermoplastique, soit par la cuisson et réticulation complète de la résine lorsqu'il s'agit d'un polymère thermodurcissable. Après cette consolidation, la pièce est dém oulée.

La description ci-avant et les exemples de réalisation montrent que l'invention atteint le but visé en permettant la réalisation d'une pièce composite de forme complexe à partir d'une préforme sèche réalisée à plat et au moyen d'une opération unique d'imprégnation. Le procédé objet de l'invention est particulièrement adapté au domaine automobile

## Revendications

1. Procédé pour la réalisation d'une pièce (100) composite à renfort fibreux continu à partir d'une préforme sèche, lequel procédé comprend :
a. une opération de drapage à plat d'une première stratification (311, 312) de plis secs déformables ;
b. le positionnement sur ladite première stratification d'un noyau (200) constitué d'un matériau thermoformable s'étendant sur une partie de la surface de la première stratification ;
c. une opération de drapage d'une deuxième stratification (321, 322) de plis secs déformables, s'étendant au dessus du noyau et jusqu'à la première stratification ;
d. une opération de couture (410, 420, 430) suivant un contour défini, ladite couture liant et s'étendant entre la deuxième et la première stratification ;
e. placer la préforme obtenue à l'issue de l'étape d) dans l'empreinte tridimensionnelle d'un moule (600) ;
f. imprégner la préforme sèche d'un polymère ;
g. consolider le dit polymère ;
h. démouler la pièce obtenue à partir de la préforme ;
**caractérisé en ce qu'**il comprend entre l'étape d) et l'étape e) une étape consistant à :
j. thermoformer la préforme comprenant le noyau (200) à la forme de la pièce ;
dans lequel l'étape d) comprend une opération consistant à :
di. réaliser une couture (420) s'étendant entre la première et la deuxième stratification selon un contour de pliage ;
et dans lequel l'étape e) comprend une opération consistant à:
ei. plier la préforme dans l'empreinte selon le contour de couture réalisé à l'étape di).

2. Procédé selon la revendication 1, dans lequel la couture (410, 420, 430) réalisée à l'étape d) est une couture en zigzag.

3. Procédé selon les revendications 1 ou 2, comprenant une étape consistant à
I. coller une bande (500) de renfort de fibres unidirectionnelles à l'emplacement de la couture réalisée à l'étape d).

4. Procédé selon la revendication 3, dans lequel les fibres de ladite bande (500) unidirectionnelle sont orientées parallèlement à la direction générale de progression de la couture.

5. Procédé selon la revendication 1, comprenant entre les étapes j) et e) une étape de stockage intermédiaire de la préforme et une étape de transport de la préforme.

6. Procédé selon la revendication 1, dans lequel les étapes g) et f) sont réalisées avec la préforme maintenue sur l'empreinte par un ensachage tiré au vide.

7. Procédé selon la revendication 1, dans lequel les étapes g) et f) sont réalisées avec la préforme maintenue dans une cavité comprise entre un moule mâle (610) et un moule femelle (620).

8. Procédé selon la revendication 1 à 7, dans lequel le noyau (200) comporte des perforations (220) pour faciliter l'imprégnation de la préforme au cours de l'étape f).

9. Procédé selon la revendication 1 à 8, dans lequel la pièce (100) constitue une partie de plancher d'un véhicule automobile.

## Patentansprüche

1. Verfahren zum Fertigen eines Verbundteils (100) aus einer Verstärkung aus durchgehenden Fasern von einem trockenen Vorformling, wobei das Verfahren umfasst:
a. einen Vorgang eines Flachstreckens einer ersten Laminierung (311, 312) von verformbaren trockenen Lagen;
b. Positionieren auf der ersten Laminierung eines Kerns (200), der aus einem warmformbaren Material besteht, das sich über einen Abschnitt der Oberfläche der ersten Laminierung erstreckt;
c. einen Vorgang eines Streckens einer zweiten Laminierung (321, 322) von verformbaren trockenen Lagen, die sich über den Kern und bis zu der ersten Laminierung erstrecken;
d. einen Nähvorgang (410, 420, 430) entlang einer definierten Kontur, wobei die Naht die zweite und die erste Laminierung verbindet und sich zwischen diesen erstreckt;
e. Platzieren des erhaltenen Vorformlings nach Schritt d) in dem dreidimensionalen Abdruck einer Pressform (600);
f. Imprägnieren des trockenen Vorformlings mit einem Polymer;
g. Verfestigenlassen des Polymers;
h. Entformen des erhaltenen Teils aus dem Vorformling;
**dadurch gekennzeichnet, dass** es zwischen Schritt d) und Schritt e) einen Schritt umfasst, der besteht aus:
j. Wärmeformen des Vorformlings, umfassend den Kern (200) in der Form des Teils;
wobei Schritt d) einen Vorgang umfasst, der besteht aus:
di. Fertigen einer Naht (420), die sich zwischen der ersten und der zweiten Laminierung gemäß einer Lagenkontur erstreckt;
und wobei Schritt e) einen Vorgang umfasst, der besteht aus:
ei. Falten des Vorformlings in dem Abdruck gemäß der in Schritt di) gefertigten Nähkontur.

2. Verfahren nach Anspruch 1, wobei die in Schritt d) gefertigte Naht (410, 420, 430) eine Zickzacknaht ist.

3. Verfahren nach Anspruch 1 oder 2, umfassend einen Schritt, der besteht aus:
I. Kleben eines Streifens (500) zur Verstärkung von unidirektionalen Fasern an die Stelle der in Schritt d) gefertigten Naht.

4. Verfahren nach Anspruch 3, wobei die Fasern des unidirektionalen Streifens (500) parallel zu der allgemeinen Verlaufsrichtung der Naht ausgerichtet sind.

5. Verfahren nach Anspruch 1, umfassend zwischen Schritten j) und e) einen Schritt eines Zwischenlagerns des Vorformlings und einen Schritt eines Transportierens des Vorformlings.

6. Verfahren nach Anspruch 1, wobei die Schritte g) und f) mit dem Vorformling, der auf dem Abdruck durch eine vakuumierte Einsackung gehalten wird, durchgeführt werden.

7. Verfahren nach Anspruch 1, wobei die Schritte g) und f) mit dem Vorformling, der in einem Hohlraum zwischen einem Stempel (610) und einer Matrize (620) gehalten wird, durchgeführt werden.

8. Verfahren nach Anspruch 1 bis 7, wobei der Kern (200) Perforationen (220) aufweist, um die Imprägnierung des Vorformlings im Lauf von Schritt f) zu erleichtern.

9. Verfahren nach Anspruch 1 bis 8, wobei das Teil (100) einen Fußraumabschnitt eines Kraftfahrzeugs bildet.

## Claims

1. A method for producing a composite part (100) with continuous fiber reinforcement from a dry preform, which method comprises:
a. a flat draping operation of a first deformable dry ply lamination (311, 312);
b. positioning on said first lamination a core (200) made of a thermoformable material extending over a portion of the surface of the first laminate;
c. an operation of draping a second lamination (321, 322) of deformable dry plies extending above the core and up to the first laminate;
d. a stitching operation (410, 420, 430) along a defined contour, said stitching joining and extending between the second and the first laminate;
e. placing the preform obtained at the end of step d) in the three-dimensional cavity of a mold (600);
f. impregnating the dry preform with a polymer;
g. consolidating said polymer;
h. demolding the part obtained from the preform;
**characterized in that** it comprises, between step d) and step e), a step of:
j. thermoforming the preform comprising the core (200) in the shape of the part;
wherein step d) comprises an operation of:
di. producing a seam (420) extending between the first and second laminates along a bending contour;
and wherein step e) comprises an operation of:
ei. folding the preform in the cavity according to the seam contour made in step di).

2. The method according to claim 1, wherein the seam (410, 420, 430) carried out in step d) is a zig-zag seam.

3. The method according to claims 1 or 2, comprising a step of:
I. bonding a unidirectional fiber reinforcement strip (500) at the location of the seam carried out in step d).

4. The method according to claim 3, wherein the fibers of said unidirectional strip (500) are oriented parallel to the general direction of progression of the seam.

5. The method according to claim 1, comprising, between steps j) and e), an intermediate storage step of the preform and a step of transporting the preform.

6. The method according to claim 1, wherein steps g) and f) are carried out with the preform held on the cavity by vacuum bagging.

7. The method according to claim 1, wherein the steps g) and f) are carried out with the preform held in a cavity between a male mold (610) and a female mold (620).

8. The method according to claims 1 to 7, wherein the core (200) comprises perforations (220) to facilitate impregnation of the preform during step f).

9. The method according to claims 1 to 8, wherein the part (100) constitutes a floor part of a motor vehicle.
